# FASCICULE DE BREVET EUROPEEN

(11) **EP 3 830 332 B1**
(45) Date de publication et mention de la délivrance du brevet: **26.06.2024**
(21) Numéro de dépôt: 19748871.1
(22) Date de dépôt: 09.07.2019
(51) Int. Cl.: D07B 7/18, E01D 19/16, E04C 5/08, D07B 5/00, D07B 1/06

(54) **PROCEDE DE FABRICATION D'UN TORON INDIVIDUELLEMENT GAINE, TORON AINSI OBTENU ET INSTALLATION DE FABRICATION DU TORON**
VERFAHREN ZUR HERSTELLUNG EINES EINZELN UMMANTELTEN STRANGS, DADURCH HERGESTELLTER STRANG UND STRANGHERSTELLUNGSANLAGE
METHOD FOR MANUFACTURING AN INDIVIDUALLY SHEATHED STRAND, STRAND THUS OBTAINED AND STRAND MANUFACTURING INSTALLATION

(30) Priorité: 31.07.2018 FR 1857162
(43) Date de publication de la demande: 09.06.2021
(73) Titulaire: Soletanche Freyssinet, 92500 Rueil Malmaison (FR)
(72) Inventeur: FABRY, Nicolas, 92160 Antony (FR); ZIVANOVIC, Ivica, 60260 Gouvieux (FR)
(74) Mandataire: Plasseraud IP
(86) Numéro de dépôt international: PCT/FR2019/051727
(87) Numéro de publication internationale: WO 2020/025872

(56) Documents cités:
- WO-A1-2008/093651
- WO-A1-2012/017135
- JP-A- 2002 201 577

## Description

La présente invention concerne les torons individuellement protégés utilisés dans les ouvrages de génie civil, notamment pour précontraindre ou suspendre des portions d'ouvrage.

### ARRIERE-PLAN

Les torons individuellement gainés comprennent un groupement de fils métalliques torsadés entre eux, qui sont le plus souvent au nombre de sept. Les fils métalliques sont fréquemment soumis à un traitement électrochimique (galvanisation, galfanisation, ...) procurant une certaine résistance à la corrosion.

On utilise couramment des torons individuellement protégés par une gaine de matière plastique, habituellement un polyéthylène à haute densité (PEHD) ou un époxy, qui crée une barrière étanche autour des fils métalliques. Un produit de remplissage, pouvant être de plusieurs types (cire, graisse, polymère...), comble les intervalles existant entre les fils métalliques et la gaine individuelle pour renforcer la protection du toron contre la corrosion.

Le produit de remplissage permet soit un glissement des fils métalliques du toron par rapport à sa gaine individuelle (toron gainé-graissé ou gainé-ciré), soit au contraire une adhérence pour transmettre des efforts de cisaillement entre la gaine et le toron (toron cohérent).

Dans le toron cohérent, le produit de remplissage est typiquement un polymère adhérisé sur les fils métalliques et sur l'intérieur de la gaine. Le toron cohérent est notamment utilisable lorsqu'il est nécessaire de transmettre des efforts tangentiels de la gaine aux fils métalliques. Voir par exemple EP-A-0 855 471. C'est le cas par exemple dans les câbles porteurs de ponts suspendus dans lesquels la charge transmise par chaque suspente provoque un effort tangentiel sur le câble au niveau du collier d'accrochage de la suspente, ou dans des selles déviatrices installées sur des pylônes d'ouvrages haubanés.

Dans le toron gainé-graissé ou gainé-ciré, le produit de remplissage est un lubrifiant, ce qui a notamment pour avantage d'améliorer le comportement en fatigue du toron en lubrifiant les contacts entre ses fils métalliques. Voir par exemple EP-A-1 211 350. En outre, les graisses ou cires employées dans les torons gainés-graissés ou gainés-cirés sont généralement moins onéreuses que les résines employées dans les torons cohérents, de sorte que le toron gainé-graissé ou gainé-ciré a un coût de revient inférieur.

JP 2005-048405 A divulgue un toron visant à éviter le bruit dû aux collisions entre les fils métalliques et la gaine. Pour cela, le toron comporte des tronçons où une couche de mousse d'uréthane est formée entre le groupement de fils métalliques et sa gaine tubulaire en polyéthylène et, en alternance le long du toron, des tronçons où la gaine est resserrée pour être au contact du groupement de fils métalliques.

EP-A-2 601 344 divulgue un toron ayant des tronçons de type cohérent alternant, le long du toron, avec des tronçons de type gainé-ciré. Ce toron est réalisé à partir d'un toron gainé-ciré dont la gaine est retirée localement, de même que la cire, avant d'appliquer la résine procurant la propriété d'adhérence. Cette méthode, peu industrielle et donc relativement coûteuse, entraîne des discontinuités de la gaine sur le toron final. En outre, il est délicat en pratique de bien éliminer la cire pour qu'elle ne perturbe pas l'adhérence souhaitée dans les tronçons de type cohérent. L'incapacité à dégraisser totalement et aisément ces tronçons limite ou empêche la bonne adhérence de la résine (une fois durcie) sur l'acier.

JP 2002 201577 A divulgue par ailleurs une méthode pour protéger des câbles de la corrosion pendant leur fabrication.

Un but de la présente invention est de proposer une technique fiable et économique pour réaliser un toron ayant un ou plusieurs tronçons à gaine adhérente et un ou plusieurs tronçons où la même gaine se prolonge sans avoir besoin d'adhérer aux fils métalliques.

### RESUME

Il est proposé un procédé de fabrication d'un toron individuellement gainé selon la revendication 1.

Le procédé produit un toron gainé à remplissage composite dans des conditions industrielles bien maîtrisées. La gaine, en général de section extérieure constante, assure une protection fiable et ininterrompue des fils métalliques enrobés tantôt d'un produit procurant une adhérence, tantôt d'un produit lubrifiant, selon les besoins.

L'invention permet de fabriquer une gaine continue couvrant l'ensemble des tronçons tout en garantissant les caractéristiques mécaniques souhaitées dans chaque tronçon. En particulier, l'adhérence de la résine durcie n'est pas parasitée par la présence de cire dans les tronçons de toron cohérent.

Un mode d'exécution particulier du procédé comprend :
faire défiler le groupement de fils métalliques le long d'une succession de postes jusqu'à la filière, incluant un poste d'application de produit de remplissage ;
écarter les fils métalliques du groupement en entrée du poste d'application de produit de remplissage ;
appliquer sélectivement le premier produit de remplissage et le second produit de remplissage sur les fils métalliques écartés dans le poste d'application de produit de remplissage, en fonction de l'avancement du groupement de fils métalliques dans le poste d'application de produit de remplissage ; et
resserrer les fils métalliques du groupement en sortie du poste d'application de produit de remplissage.

Le poste d'application de produit de remplissage peut comprendre une première partie activée sélectivement pour appliquer le premier produit de remplissage sur les fils métalliques écartés du groupement, et une seconde partie activée sélectivement pour appliquer le second produit de remplissage sur les fils métalliques écartés du groupement, la seconde partie étant plus en amont que la première partie relativement à la filière.

Dans une réalisation du poste d'application de produit de remplissage, la première partie comprend des buses de projection du premier produit de remplissage dirigées de façon convergente vers une ligne selon laquelle les fils métalliques écartés du groupement défilent dans le poste d'application de produit de remplissage. Cette première partie peut en outre comprendre un bac de récupération du premier produit de remplissage sous les buses de projection, et un système de recirculation du premier produit de remplissage récupéré dans le bac pour le ramener vers les buses de projection.

Dans une réalisation du poste d'application de produit de remplissage, la seconde partie du poste d'application de produit de remplissage comprend un mélangeur pour réaliser un mélange de plusieurs composants et une tête de dépôt du mélange sur les fils métalliques écartés du groupement.

Un rideau d'air peut être soufflé sur le groupement de fils métalliques écartés entre les première et seconde parties du poste d'application de produit de remplissage.

Un mode d'exécution du procédé comprend chauffer le groupement de fils métalliques avant le poste d'application de produit de remplissage, à une température comprise entre 80 °C et 140 °C, par exemple par induction.

Un mode d'exécution du procédé comprend réguler la température du groupement de fils métalliques resserrés en aval du poste d'application de produit de remplissage, le groupement de fils métalliques atteignant la filière, où la matière plastique de la gaine est extrudée, à une température comprise entre 60 °C et 120 °C. La régulation de la température du groupement de fils métalliques en aval du poste d'application de produit de remplissage peut comprendre refroidir le groupement de fils métalliques à une température comprise entre 10 °C et 30 °C, puis réchauffer le groupement de fils métalliques à la température comprise entre 60 °C et 120 °C. Le refroidissement peut être réalisé par un flux d'air, et son réchauffement par induction.

Dans un mode d'exécution du procédé, la filière appartient à une tête d'extrusion où sont déposés successivement, sur le groupement de fils métalliques, un primaire d'adhérence puis la matière plastique de la gaine.

Lorsque la tête d'extrusion est traversée par un tronçon du toron où le groupement de fils métalliques est revêtu du premier produit de remplissage, on peut réduire le débit d'injection du primaire d'adhérence relativement à un moment où la tête d'extrusion est traversée par un tronçon du toron où le groupement de fils métalliques est revêtu du second produit de remplissage.

En aval de la filière, le groupement de fils métalliques enveloppé de la gaine peut être refroidi dans un bain d'eau.

Un autre aspect de l'invention se rapporte à un toron individuellement gainé selon la revendication 16.

Le toron individuellement gainé peut présenter au moins un troisième tronçon situé entre un premier tronçon et un second tronçon, où un mélange des premier et second produits de remplissage est contenu dans la gaine avec le groupement de fils métalliques. Chaque troisième tronçon peut avoir une longueur comprise entre 20 cm et 1 m.

Un autre aspect encore de l'invention se rapporte à une installation de fabrication d'un toron individuellement gainé selon la revendication 19.

### BREVE DESCRIPTION DES DESSINS

D'autres particularités et avantages de la présente invention apparaîtront dans la description ci-après d'exemples de réalisation non limitatifs, en référence aux dessins annexés, dans lesquels :
- la figure 1 est un schéma en vue de côté d'un exemple de réalisation d'un toron individuellement gainé selon l'invention ;
- les figures 2 et 3 sont des vues en coupe transversale de ce toron individuellement gainé, selon les plans II-II et III-III indiqués sur la figure 1 ;
- la figure 4 est un schéma d'un exemple d'installation de fabrication selon l'invention ;
- la figure 5 est un schéma en coupe transversale d'une partie de l'installation, servant à appliquer de la cire sur les fils métalliques d'un toron ; et
- la figure 6 est une vue en perspective de la partie représentée sur la figure 5.

### DESCRIPTION DE MODES DE REALISATION

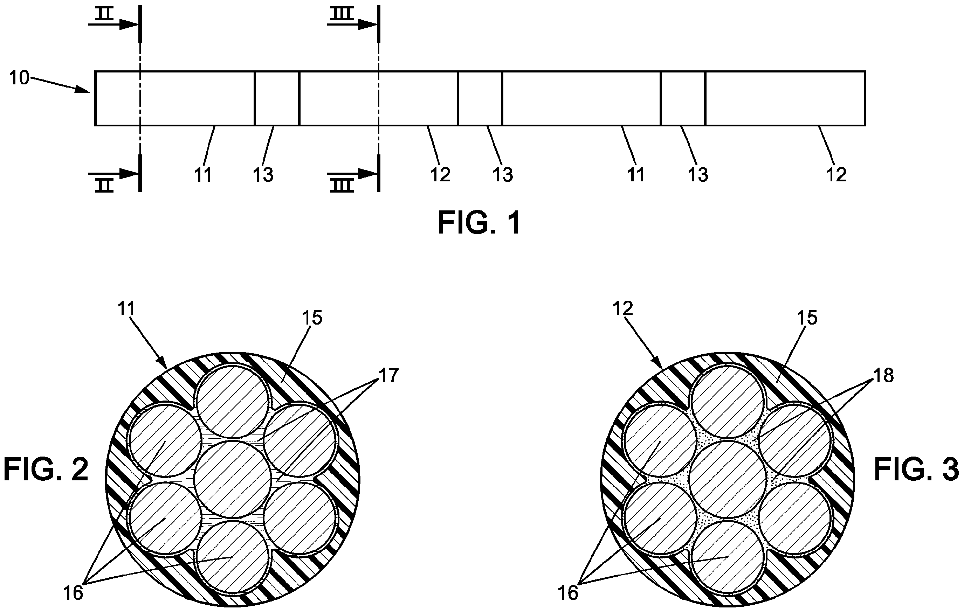

Les figures 1 à 3 montrent un toron individuellement gainé 10 qui, sur sa longueur, présente successivement des tronçons 11 où la gaine 15 du toron n'adhère pas au groupement de fils métalliques 16, et des tronçons 12 où la gaine 15 adhère au groupement des fils métalliques 16.

Dans l'exemple représenté, les fils métalliques 16 du groupement sont au nombre de sept, avec un fil central sensiblement rectiligne (lorsque le toron 10 est lui-même rectiligne) et six fils périphériques torsadés autour du fils central.

Un produit de remplissage souple comble les interstices qui s'étendent hélicoïdalement autour du fil central avec une section en forme de triangle curviligne, et recouvre également l'extérieur des fils périphériques. Ce produit de remplissage est contenu avec le groupement de fils métalliques 16 à l'intérieur de la gaine 15.

À titre d'exemple, la gaine 15 est réalisée en PEHD.

Dans les tronçons 11 du toron 10, le produit de remplissage 17 a des propriétés lubrifiantes. Cela peut notamment être une cire ou une graisse. Dans la suite de la présente description, on considère que le produit de remplissage 17 est une cire, sans que ceci soit limitatif.

Dans les tronçons 12 du toron 10, le produit de remplissage 18 adhère à la fois aux fils métalliques 16 et à la surface interne de la gaine 15. Il peut ainsi résister à des contraintes de cisaillement qui se développent lorsque des efforts tangentiels sont transmis de le gaine 15 aux fils 16. Dans la suite de la présente description, on considère que le produit de remplissage 18 est une résine, sans que ceci soit limitatif.

La gaine 15 s'étend continûment autour du groupement de fils métalliques 16 tout au long du toron 10. Les tronçons 11 et les tronçons 12 alternent sur la longueur du toron.

Comme le montre la figure 1, il peut exister entre eux des tronçons de transition 13 dans lesquels c'est un mélange des produits 17 et 18 (cire et résine, par exemple), qui est contenu dans la gaine 15 avec le groupement de fils métalliques 16. Les tronçons de transition 13 ont typiquement une longueur comprise entre 20 cm et 3 m. À titre d'exemple, cette longueur peut être de 40 à 50 cm.

Dans un exemple d'application, le toron individuellement gainé 10 fait partie d'un hauban d'un ouvrage haubané tel qu'un pont. Dans certaines conceptions d'ouvrages haubanés, les haubans sont déviés dans une selle montée sur un pylône. Dans cette selle, les torons qui constituent un hauban sont déviés sans altérer leur résistance mécanique. Un frottement suffisant doit exister entre les torons et les conduits de la selle qui reçoivent chacun un toron, pour une reprise optimale par le pylône recevant la selle des efforts différentiels subis par le hauban de part et d'autre du pylône. Dans cette application, on peut réaliser les torons 10 constitutifs du hauban de telle sorte qu'un tronçon à adhérence 12 soit localisé dans le corps de la selle, tandis que des tronçons sans adhérence 11 sont formés sur le reste du toron pour constituer la partie courante du hauban. Dans cette partie courante, qui constitue en général la majorité de la longueur du hauban, les frottements existant entre les fils métalliques 16 des torons sont limités par la lubrification apportée par la cire 17. En outre, comme la cire 17 est généralement moins onéreuse que la résine adhérente 18, le surcoût engendré par la nécessité d'avoir une adhérence au niveau de la selle reste limité.

Les tronçons de transition 13, qui résultent du mode de fabrication du toron individuellement gainé, ne perturbent pas le comportement mécanique du toron. Ils sont au contraire avantageux puisqu'ils évitent une transition brusque entre un tronçon à adhérence 12 et un tronçon sans adhérence 11.

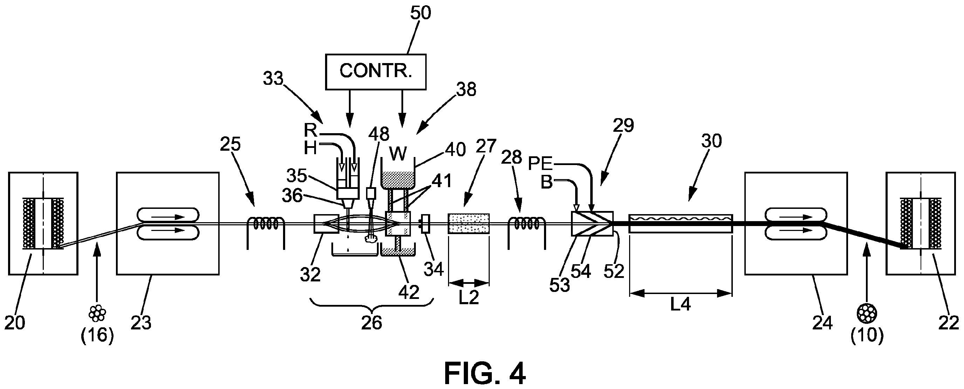

Une installation pour la fabrication d'un tel toron individuellement gainé est représentée schématiquement sur la figure 4.

Le groupement de fils métalliques 16 (toron nu éventuellement galvanisé ou galfanisé), précédemment fabriqué, est amené sur une bobine 20 depuis laquelle il est déroulé pour être entraîné le long de l'installation. Le produit fini est le toron individuellement gainé 10 qui, une fois les opérations terminées, est enroulé sur une autre bobine 22 sur laquelle il pourra être stocké et transporté.

Pour l'entraînement du toron le long de son trajet dans l'installation, on prévoit par exemple deux dispositifs d'entraînement à chenilles 23, 24, l'un qui prélève le toron nu 16 sur la bobine 20, et l'autre qui tire le toron individuellement gainé 10 pour l'amener jusqu'à la bobine 22. Si nécessaire, d'autres dispositifs d'entraînement peuvent être prévus le long du trajet.

Divers postes de traitement 25-30 se succèdent le long du trajet du toron dans l'installation.

Un premier poste, situé en aval du dispositif d'entraînement 23, est un inducteur 25 dans lequel le toron nu 16 est chauffé pour le porter à une température T₁. La température T₁ est typiquement comprise entre 80 °C et 140 °C. Le chauffage par induction est efficace et évite d'avoir à amener un élément chauffant au contact des fils métalliques.

Ensuite, un poste d'application de produit de remplissage 26 réalise l'application sélective de la cire 17 ou de la résine 18 entre et autour des fils métalliques 16 du toron.

Le poste 26 comprend d'abord un écarteur 32 qui agrippe les fils périphériques du toron et leur applique une torsion pour les épanouir. Ainsi, les fils métalliques traversent le poste 26 en configuration écartée. Après l'écarteur, le poste 26 comprend deux parties 33, 38 pour, respectivement, le dépôt de la résine 18, et l'application de la cire 17.

La partie 33 comprend une tête 36 dirigée vers le groupement de fils écartés pour y déposer un ou plusieurs cordons de résine 18. Lorsqu'ensuite les fils métalliques se resserrent, la résine 18 qui a été déposée dans un état pâteux se déforme pour combler les interstices internes du toron, et déborder sur sa surface extérieure. À l'extrémité aval du poste 26, un conformateur 34 vérifie que les fils métalliques 34 se sont bien replacés dans leur configuration serrée, et élimine l'excédent de résine 18.

La résine 18 est typiquement une résine bi-composants. La tête 36 est alors reliée à un mélangeur 35 qui réalise le mélange des composants, à savoir la base polymérique R de la résine et un durcisseur H, avant d'envoyer le mélange vers la tête 36.

En aval de la partie 33 servant à déposer la résine 18, le poste 26 comprend la partie 38 servant à appliquer la cire 17.

Habituellement, pour fabriquer un toron gainé-ciré, on fait circuler le toron nu dans un bain de cire fluidifiée, puis l'excédent de cire est enlevé par un gabarit autour du toron ainsi enduit. Mais cette méthode n'est pas appropriée dans le contexte du procédé selon l'invention, puisqu'on souhaite éviter la présence de cire dans les tronçons à adhérence 12 du toron individuellement gainé 10.

La partie 38 comporte de préférence un réservoir 40 où la cire W est amenée et chauffée à sa température d'application, à laquelle elle est à l'état fluide, des buses 41 pour projeter la cire à l'état fluide sur les fils métalliques écartés du toron, un bac 42 de récupération de la cire qui a coulé sous le toron et les buses 41, et un système de recirculation (non représenté), pour ramener la cire récupérée dans le bac 42 vers le réservoir 40 et les buses de projection 41.

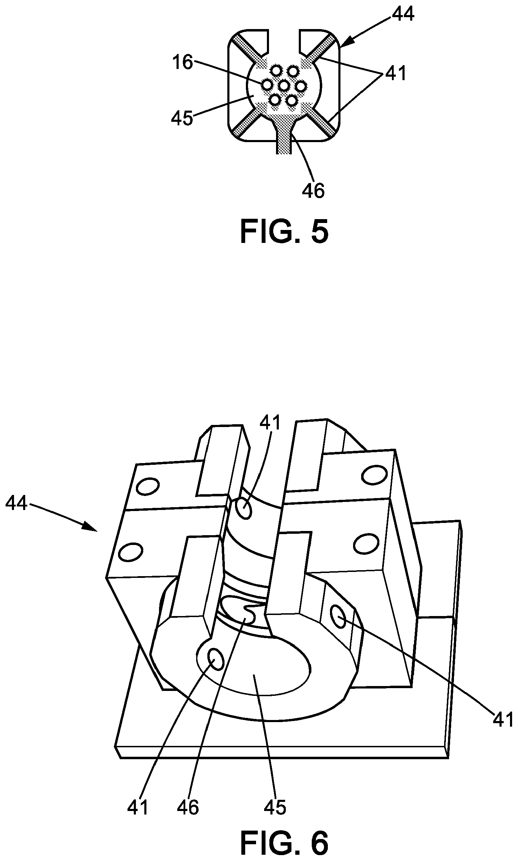

Les buses de projection 41 peuvent être formées dans un corps 44 représenté sur les figures 5 et 6. Ce corps 44 comporte un alésage 45 dans lequel circulent les fils métalliques écartés du toron. Les buses 41 sont formées dans la paroi de l'alésage 45. Dans l'exemple représenté, il y a deux ensembles de quatre buses 41 qui se succèdent le long du trajet du toron. Chaque ensemble comporte, dans cet exemple, quatre buses qui convergent vers la direction de défilement du toron, par exemple en étant orientées à 90° les unes des autres comme représenté schématiquement sur la figure 5. À sa partie basse, l'alésage 45 comporte un trou 46 pour l'évacuation de l'excès de cire vers le bac 42.

Comme on peut le voir de manière schématique sur la figure 4, la partie 38 servant à appliquer la cire est située dans la zone où les fils métalliques 16 du toron se resserrent en formation compacte. En particulier, le premier ensemble de buses 41 peut être placé à un endroit où les fils métalliques 16 sont encore écartés, tandis que le deuxième ensemble de buses 41 est placé un peu en aval, là où les fils métalliques 16 viennent de se resserrer. Ainsi, on assure que la cire ne s'évacue pas trop et qu'il en reste suffisamment dans les interstices du toron. Le deuxième ensemble de buses 41 assure une enduction suffisante de la périphérie du toron.

À la sortie du poste 26, le conformateur 34 élimine, selon le cas, l'excès de résine 18 ou l'excès de cire 17.

Pour éviter que la partie 33 du poste 26 interfère avec la partie 38, la séparation entre ces deux parties peut être matérialisée par un rideau d'air comprimé soufflé par un compresseur 48.

Les parties 33, 38 du poste d'application de produit de remplissage 26 sont commandées par un contrôleur 50 afin que le débit de résine appliquée par la tête 36 et le débit de cire projetée par les buses 41 soient sélectionnés en fonction de l'avancement du toron dans le poste 26. Quand c'est un tronçon 11 du toron 10 qui circule dans le poste 26, le contrôleur 50 active la partie 38 et désactive la partie 33. Inversement, quand c'est un tronçon 12 du toron 10 qui circule dans le poste 26, le contrôleur 50 active la partie 33 et désactive la partie 38.

Le contrôleur 50 permet ainsi de maîtriser la localisation des tronçons à adhérence 12 et des tronçons sans adhérence 11 du toron individuellement gainé 10. On peut ainsi régler à la demande la répartition spatiale des tronçons 11, 12 pour adapter le toron 10 à l'ouvrage destiné à en être équipé.

Dans les transitions entre les portions 11 et 12, le contrôleur 50 régule également les quantités de produits de remplissage afin de former les tronçons de transition 13 de la manière désirée.

En aval du poste 26, la température du toron revêtu de résine ou de cire est régulée dans les postes 27, 28 pour d'une part autoriser le durcissement de la résine 18, et d'autre part assurer une température appropriée pour l'approche du toron dans la tête d'extrusion 29.

D'abord, le poste 27 est un tunnel de refroidissement à air d'une longueur de 5 m à 10 m, par exemple, pour amener le toron revêtu à une température T₂ comprise entre 10 °C et 30 °C.

Ensuite, le poste 28 est un autre inducteur qui chauffe les fils métalliques du toron à une température T₃ inférieure à la température T₁ précitée. La température T₃ est par exemple comprise entre 60 °C et 120 °C.

En sortie de l'inducteur 28, le toron pénètre dans la tête d'extrusion 29. La tête d'extrusion 29 comporte la filière 52 à son extrémité aval. Juste en amont de la filière 52 se trouve de système d'injection pour introduire successivement, sur la périphérie du toron, un primaire d'adhérence B puis le polyéthylène PE amené à l'état liquide en vue de former la gaine 15 après refroidissement. Les conduits 53 pour l'injection du primaire d'adhérence B sont situés immédiatement en amont des conduits 54 pour l'injection du polyéthylène PE, qui sont eux-mêmes situés immédiatement en amont de la filière 52 dans la tête d'extrusion 29.

Le primaire B assure l'adhérence de la gaine 15 sur la résine 18 déposée dans les tronçons 12 du toron 10. Dans un exemple particulier, il s'agit d'un polymère commercialisé sous la marque Orevac par la société Arkema. Dans les tronçons 11 du toron 10, il est préférable de ne pas stopper le débit du primaire d'adhérence B dans le système d'injection pour ne pas perturber celui-ci. On peut cependant réduire ce débit car le primaire d'adhérence B n'est pas nécessaire dans les tronçons 11. Le primaire B adhère à la surface interne de la gaine 15, mais ne perturbe pas le comportement de la cire lubrifiante dans les tronçons 11.

En aval de la filière 52, le dernier poste de l'installation avant le dispositif d'entraînement à chenilles 24 est un bain d'eau 30 dans lequel le groupement de fils métalliques 16 enveloppé de la gaine 15 est refroidi à température ambiante, soit entre 10 °C et 30 °C.

Les modes de réalisation décrits ci-dessus sont une simple illustration de la présente invention. Diverses modifications peuvent leur être apportées sans sortir du cadre de l'invention qui ressort des revendications annexées.

## Revendications

1. Procédé de fabrication d'un toron individuellement gainé (10), comprenant
entraîner un groupement de fils métalliques (16) à travers une filière (52) ;
en amont de la filière, appliquer un premier produit de remplissage (17) dans un premier tronçon (11) du toron ;
en amont de la filière, appliquer un second produit de remplissage (18) dans un second tronçon (12) du toron, les premier et second tronçons (11, 12) se succédant le long du toron, le second produit de remplissage (18) présentant une plus grande adhérence avec le groupement de fils métalliques (16) que le premier produit de remplissage (17) ; et
extruder une matière plastique autour du groupement de fils métalliques (16) traversant la filière (52), de façon à envelopper le groupement de fils métalliques revêtu des premier et second produits de remplissage (17,18) dans une gaine continue (15) et ayant une section extérieure constante formée par la matière plastique extrudée, le second produit de remplissage (18) présentant une plus grande adhérence avec la gaine (15) que le premier produit de remplissage (17),
dans lequel le second produit de remplissage adhère à la fois aux fils métalliques (16) et à la surface interne de la gaine (15).

2. Procédé selon la revendication 1, comprenant :
faire défiler le groupement de fils métalliques (16) le long d'une succession de postes (25-30) jusqu'à la filière, incluant un poste d'application de produit de remplissage (26) ;
écarter les fils métalliques du groupement en entrée du poste d'application de produit de remplissage (26) ;
appliquer sélectivement le premier produit de remplissage (17) et le second produit de remplissage (18) sur les fils métalliques écartés dans le poste d'application de produit de remplissage, en fonction de l'avancement du groupement de fils métalliques dans le poste d'application de produit de remplissage ; et
resserrer les fils métalliques du groupement en sortie du poste d'application de produit de remplissage (26).

3. Procédé selon la revendication 2, dans lequel le poste d'application de produit de remplissage (26) comprend une première partie (38) activée sélectivement pour appliquer le premier produit de remplissage (17) sur les fils métalliques écartés du groupement, et une seconde partie (33) activée sélectivement pour appliquer le second produit de remplissage (18) sur les fils métalliques écartés du groupement, la seconde partie (33) étant plus en amont que la première partie relativement à la filière (52).

4. Procédé selon la revendication 3, dans lequel la première partie (38) du poste d'application de produit de remplissage (26) comprend des buses (41) de projection du premier produit de remplissage (17) dirigées de façon convergente vers les fils métalliques écartés du groupement.

5. Procédé selon la revendication 4, dans lequel la première partie (33) du poste d'application de produit de remplissage (26) comprend en outre un bac (42) de récupération du premier produit de remplissage (18) sous les buses de projection (41), et un système de recirculation du premier produit de remplissage récupéré dans le bac pour le ramener vers les buses de projection.

6. Procédé selon l'une quelconque des revendications 2 à 5, dans lequel la seconde partie (33) du poste d'application de produit de remplissage (26) comprend un mélangeur (35) pour réaliser un mélange de plusieurs composants (R, H) et une tête (36) de dépôt du mélange sur les fils métalliques écartés du groupement.

7. Procédé selon l'une quelconque des revendications 2 à 6, dans lequel un rideau d'air est soufflé sur le groupement de fils métalliques écartés entre les première et seconde parties (38, 33) du poste d'application de produit de remplissage (26).

8. Procédé selon l'une quelconque des revendications 2 à 7, comprenant :
chauffer le groupement de fils métalliques (16) avant le poste d'application de produit de remplissage (26), à une température comprise entre 80 °C et 140 °C.

9. Procédé selon la revendication 8, dans lequel le chauffage du groupement de fils métalliques (16) avant le poste d'application de produit de remplissage (26) est réalisé par induction.

10. Procédé selon l'une quelconque des revendications 2 à 9, comprenant :
réguler la température du groupement de fils métalliques resserrés en aval du poste d'application de produit de remplissage (26), le groupement de fils métalliques atteignant la filière (52), où la matière plastique de la gaine (15) est extrudée, à une température comprise entre 60 °C et 120 °C.

11. Procédé selon la revendication 10, dans lequel la régulation de la température du groupement de fils métalliques en aval du poste d'application de produit de remplissage (26) comprend :
refroidir le groupement de fils métalliques à une température comprise entre 10 °C et 30 °C ; puis
réchauffer le groupement de fils métalliques à la température comprise entre 60 °C et 120 °C.

12. Procédé selon la revendication 11, dans lequel le refroidissement du groupement de fils métalliques (16) est réalisé par un flux d'air, et son réchauffement est réalisé par induction.

13. Procédé selon l'une quelconque des revendications précédentes, dans lequel la filière (52) appartient à une tête d'extrusion (29) où sont déposés successivement sur le groupement de fils métalliques :
un primaire d'adhérence (B) ; et
la matière plastique de la gaine (15).

14. Procédé selon la revendication 13, dans lequel lorsque la tête d'extrusion (29) est traversée par un tronçon (11) du toron où le groupement de fils métalliques est revêtu du premier produit de remplissage (17), un débit d'injection du primaire d'adhérence (B) est réduit relativement à un moment où la tête d'extrusion est traversée par un tronçon (12) du toron où le groupement de fils métalliques est revêtu du second produit de remplissage (18).

15. Procédé selon l'une quelconque des revendications précédentes, comprenant, en aval de la filière (52) :
refroidir le groupement de fils métalliques enveloppé de la gaine dans un bain d'eau (30).

16. Toron individuellement gainé, comprenant :
un groupement de fils métalliques (16) ;
une gaine (15) en matière plastique, ;
un premier produit de remplissage (17) contenu dans la gaine (15) avec le groupement de fils métalliques (16) dans un premier tronçon (11) du toron ; et
un second produit de remplissage (18) contenu dans la gaine (15) avec le groupement de fils métalliques (16) dans un second tronçon (12) du toron distinct du premier tronçon (11),
le second produit de remplissage (18) adhère à la fois aux fils métalliques (16) et à la surface interne de la gaine (15), les premier et second tronçons se succédant le long du toron, le second produit de remplissage (18) présentant une plus grande adhérence avec le groupement de fils métalliques (16) et la gaine (15) que le premier produit de remplissage (17), et en ce que la gaine (15) en matière plastique est continue et de section extérieure constante.

17. Toron individuellement gainé selon la revendication 16, présentant au moins un troisième tronçon (13) situé entre un premier tronçon (11) et un second tronçon (12), où un mélange des premier et second produits de remplissage (17, 18) est contenu dans la gaine (15) avec le groupement de fils métalliques (16).

18. Toron individuellement gainé selon la revendication 17, dans lequel chaque troisième tronçon (13) a une longueur comprise entre 20 cm et 3 m.

19. Installation pour la fabrication d'un toron individuellement gainé (10) selon le procédé de l'une quelconque des revendications 1 à 15, l'installation comprenant
un dispositif d'entraînement (23,24) du toron le long de son trajet dans l'installation,
une filière (52) pour recevoir un groupement de fils métalliques (16) ;
sur un côté amont de la filière (52), un système (26) d'application d'un produit de remplissage sur le groupement de fils métalliques (16) propre à réaliser l'application sélective d'un premier produit de remplissage (17) ou d'un second produit de remplissage (18);
un système (29) d'extrusion d'une matière plastique autour du groupement de fils métalliques (16) entraîné à travers la filière (52) par le dispositif d'entraînement (23,24), de façon à envelopper le groupement de fils métalliques (16) revêtu du produit de remplissage (17,18) appliqué sélectivement dans une gaine continue (15) formée par la matière plastique extrudée ; et
un contrôleur (50) du système d'application du produit de remplissage (26) pour sélectionner une composition du produit de remplissage appliqué en fonction de l'avancement du groupement de fils métalliques (16) dans le système d'application du produit de remplissage, à partir du premier produit de remplissage (17) et du second produit de remplissage (18) présentant une plus grande adhérence avec le groupement de fils métalliques (16) et la gaine (15) que le premier produit, de sorte à fabriquer un toron individuellement gainé (10) qui, sur sa longueur, présente successivement des tronçons (11) où la gaine (15) du toron n'adhère pas au groupement de fils métalliques (16), et des tronçons (12) où la gaine (15) adhère au groupement des fils métalliques (16).

## Patentansprüche

1. Verfahren zum Herstellen eines einzeln ummantelten Strangs (10), das Folgendes umfasst:
Führen einer Gruppe von Metalldrähten (16) durch eine Matrize (52);
Auftragen eines ersten Füllprodukts (17) auf einen ersten Abschnitt (11) des Strangs vor der Matrize;
Auftragen eines zweiten Füllprodukts (18) auf einen zweiten Abschnitt (12) des Strangs vor der Matrize, wobei der erste und der zweite Abschnitt (11, 12) entlang des Strangs aufeinanderfolgen, wobei das zweite Füllprodukt (18) eine größere Haftung an der Gruppe von Metalldrähten (16) aufweist als das erste Füllprodukt (17); und
Extrudieren eines Kunststoffmaterials um die Gruppe von Metalldrähten (16), die durch die Matrize (52) verlaufen, um die Gruppe von Metalldrähten, die mit dem ersten und dem zweiten Füllprodukt (17, 18) beschichtet sind, in einer kontinuierlichen Ummantelung (15), die einen konstanten äußeren Querschnitt aufweist und aus dem extrudierten Kunststoffmaterial gebildet ist, zu umhüllen, wobei das zweite Füllprodukt (18) eine größere Haftung an der Ummantelung (15) aufweist als das erste Füllprodukt (17),
wobei das zweite Füllprodukt sowohl an den Metalldrähten (16) als auch an der Innenfläche der Ummantelung (15) haftet.

2. Verfahren nach Anspruch 1, das Folgendes umfasst:
Bewirken, dass sich die Gruppe von Metalldrähten (16) entlang einer Reihe von Stationen (25-30) bis zur Matrize zieht, einschließlich einer Station zum Auftragen von Füllprodukt (26);
Ausbreiten der Metalldrähte der Gruppe beim Eintreten in die Station zum Auftragen von Füllprodukt (26);
selektives Auftragen des ersten Füllprodukts (17) und des zweiten Füllprodukts (18) auf die ausgebreiteten Metalldrähte in der Station zum Auftragen von Füllprodukt in Abhängigkeit des Vorschiebens der Gruppe von Metalldrähten in der Station zum Auftragen von Füllprodukt; und
Zusammenziehen der Metalldrähte der Gruppe beim Verlassen der Station zum Auftragen von Füllprodukt (26).

3. Verfahren nach Anspruch 2, wobei die Station zum Auftragen von Füllprodukt (26) einen ersten Teil (38), der selektiv aktiviert wird, um das erste Füllprodukt (17) auf die ausgebreiteten Metalldrähte der Gruppe aufzutragen, und einen zweiten Teil (33) umfasst, der selektiv aktiviert wird, um das zweite Füllprodukt (18) auf die ausgebreiteten Metalldrähte der Gruppe aufzutragen, wobei der zweite Teil (33) im Verhältnis zur Matrize (52) weiter nachgelagert liegt als der erste Teil.

4. Verfahren nach Anspruch 3, wobei der erste Teil (38) der Station zum Auftragen von Füllprodukt (26) Sprühdüsen (41) für das erste Füllprodukt (17) umfasst, die konvergent in Richtung der ausgebreiteten Metalldrähte der Gruppe gerichtet sind.

5. Verfahren nach Anspruch 4, wobei der erste Teil (33) der Station zum Auftragen von Füllprodukt (26) ferner eine Wanne (42) zum Auffangen des ersten Füllprodukts (18) unter den Sprühdüsen (41) und ein Rezirkulationssystem für das erste Füllprodukt umfasst, das in der Wanne gesammelt wird, um es zu den Sprühdüsen zurückzubringen.

6. Verfahren nach einem der Ansprüche 2 bis 5, wobei der zweite Teil (33) der Station zum Auftragen von Füllprodukt (26) einen Mischer (35), um eine Mischung aus mehreren Komponenten (R, H) herzustellen, und einen Kopf (36) zum Aufbringen der Mischung auf die ausgebreiteten Metalldrähte der Gruppe umfasst.

7. Verfahren nach einem der Ansprüche 2 bis 6, wobei ein Luftvorhang auf die Gruppe ausgebreiteter Metalldrähte zwischen dem ersten und dem zweiten Teil (38, 33) der Station zum Auftragen von Füllprodukt (26) geblasen wird.

8. Verfahren nach einem der Ansprüche 2 bis 7, das Folgendes umfasst:
Erhitzen der Gruppe von Metalldrähten (16) vor der Station zum Auftragen von Füllprodukt (26) auf eine Temperatur zwischen 80 °C und 140 °C.

9. Verfahren nach Anspruch 8, wobei das Erhitzen der Gruppe von Metalldrähten (16) vor der Station zum Auftragen von Füllprodukt (26) durch Induktion durchgeführt wird.

10. Verfahren nach einem der Ansprüche 2 bis 9, das Folgendes umfasst:
Regulieren der Temperatur der Gruppe zusammengezogener Metalldrähte nach der Station zum Auftragen von Füllprodukt (26), wobei die Gruppe von Metalldrähten die Matrize (52) erreicht, wo das Kunststoffmaterial der Ummantelung (15) mit einer Temperatur zwischen 60 °C und 120 °C extrudiert wird.

11. Verfahren nach Anspruch 10, wobei das Regulieren der Temperatur der Gruppe von Metalldrähten vor der Station zum Auftragen von Füllprodukt (26) Folgendes umfasst:
Abkühlen der Gruppe von Metalldrähten auf eine Temperatur zwischen 10 °C und 30 °C; dann
erneutes Erhitzen der Gruppe von Metalldrähten auf eine Temperatur zwischen 60 °C und 120 °C.

12. Verfahren nach Anspruch 11, wobei das Abkühlen der Gruppe von Metalldrähten (16) durch einen Luftstrom durchgeführt wird und ihr erneutes Erhitzen durch Induktion durchgeführt wird.

13. Verfahren nach einem der vorhergehenden Ansprüche, wobei die Matrize (52) zu einem Extrusionskopf (29) gehört, wo nacheinander auf die Gruppe von Metalldrähten Folgendes aufgebracht wird:
eine Haftgrundierung (B); und
das Kunststoffmaterial der Ummantelung (15).

14. Verfahren nach Anspruch 13, wobei, wenn der Extrusionskopf (29) einen Abschnitt (11) des Strangs durchlaufen hat, wo die Gruppe von Metalldrähten mit dem ersten Füllprodukt (17) beschichtet ist, eine Injektionsrate der Haftgrundierung (B) im Verhältnis zu einer Zeit reduziert wird, in der der Extrusionskopf einen Abschnitt (12) des Strangs durchlaufen hat, in dem die Gruppe von Metalldrähten mit dem zweiten Füllprodukt (18) beschichtet ist.

15. Verfahren nach einem der vorhergehenden Ansprüche, das vor der Matrize (52) Folgendes umfasst:
Abkühlen der Gruppe von Metalldrähten, die von der Ummantelung umhüllt sind, in einem Wasserbad (30).

16. Einzeln ummantelter Strang, der Folgendes umfasst:
eine Gruppe von Metalldrähten (16);
eine Ummantelung (15) aus Kunststoffmaterial;
ein erstes Füllprodukt (17), das in der Ummantelung (15) mit der Gruppe von Metalldrähten (16) in einem ersten Abschnitt (11) des Strangs enthalten ist; und
ein zweites Füllprodukt (18), das in der Ummantelung (15) mit der Gruppe von Metalldrähten (16) in einem zweiten Abschnitt (12) des Strangs, der sich vom ersten Abschnitt (11) unterscheidet, enthalten ist,
wobei das zweite Füllprodukt (18) sowohl an den Metalldrähten (16) als auch an der Innenfläche der Ummantelung (15) haftet, sich der erste und der zweite Abschnitt entlang des Strangs aufeinanderfolgen, das zweite Füllprodukt (18) eine größere Haftung an der Gruppe von Metalldrähten (16) und der Ummantelung (15) aufweist als das erste Füllprodukt (17), und dass die Ummantelung (15) aus Kunststoffmaterial kontinuierlich ist und einen konstanten äußeren Querschnitt aufweist.

17. Einzeln ummantelter Strang nach Anspruch 16, der mindestens einen dritten Abschnitt (13) aufweist, der sich zwischen einem ersten Abschnitt (11) und einem zweiten Abschnitt (12) befindet, wo eine Mischung aus dem ersten und dem zweiten Füllprodukt (17, 18) in der Ummantelung (15) mit der Gruppe von Metalldrähten (16) enthalten ist.

18. Einzeln ummantelter Strang nach Anspruch 17, wobei jeder dritte Abschnitt (13) eine Länge zwischen 20 cm und 3 m hat.

19. Anlage zum Herstellen eines einzeln ummantelten Strangs (10) gemäß dem Verfahren nach einem der Ansprüche 1 bis 15, wobei die Anlage Folgendes umfasst:
eine Vorrichtung (23, 24) zum Führen des Strangs entlang seiner Strecke in der Anlage, eine Matrize (52) zum Aufnehmen einer Gruppe von Metalldrähten (16);
auf einer vorgelagerten Seite der Matrize (52), ein System (26) zum Auftragen eines Füllprodukts auf die Gruppe von Metalldrähten (16), das geeignet ist, das selektive Auftragen eines ersten Füllprodukts (17) oder eines zweiten Füllprodukts (18) durchzuführen;
ein System (29) zum Extrudieren eines Kunststoffmaterials um die Gruppe von Metalldrähten (16), die durch die Führungsvorrichtung (23, 24) durch die Matrize (52) geführt werden, um so die Gruppe von Metalldrähten (16), die mit dem Füllprodukt (17, 18) beschichtet sind, in einer kontinuierlichen Ummantelung (15), die durch das extrudierte Kunststoffmaterial gebildet wird, zu umhüllen; und
eine Steuerung (50) des Systems zum Auftragen von Füllprodukt (26), um eine Zusammensetzung des aufgetragenen Füllprodukts in Abhängigkeit des Vorschiebens der Gruppe von Metalldrähten (16) im System zum Auftragen von Füllprodukt aus einem ersten Füllprodukt (17) und einem zweiten Füllprodukt (18), das eine größere Haftung an der Gruppe von Metalldrähten (16) und der Ummantelung (15) aufweist als das erste Produkt, auszuwählen, um einen einzeln ummantelten Strang (10) herzustellen, der über seine Länge nacheinander Abschnitte (11), an denen die Ummantelung (15) des Strangs nicht an der Gruppe von Metalldrähten (16) haftet, und Abschnitte (12) aufweist, an denen die Ummantelung (15) an der Gruppe von Metalldrähten (16) haftet.

## Claims

1. A method for manufacturing an individually sheathed strand (10), comprising:
conveying a group of metal wires (16) through a die (52);
upstream of the die, applying a first filler product (17) to a first portion (11) of the strand;
upstream of the die, applying a second filler product (18) to a second portion (12) of the strand distinct from the first portion, the first and second portions (11, 12) extending in succession along the strand, the second filler product (18) having greater adhesion to the group of metal wires (16) than the first filler product (17); and
extruding a plastic material around the group of metal wires (16) passing through the die (52), so as to envelop the group of metal wires coated with the first and second filler products (17, 18) in a continuous and having a constant exterior section sheath (15) formed of the extruded plastic material, the second filler product (18) having a greater adhesion to the sheath (15) than the first filler product (17), wherein the second filler product (18) adheres both to the metal wires (16) and to the internal surface of the sheath (15).

2. The method as claimed in claim 1, comprising:
causing the group of metal wires (16) to move along a succession of stations (25-30) up to the die, including a filler product application station (26) ;
spreading the metal wires of the group on entering the filler product application station (26) ;
selectively applying the first filler product (17) and the second filler product (18) to the spread metallic wires in the filler product application station as a function of the advance of the group of metal wires in the filler product application station; and
compacting the metal wires of the group on leaving the filler product application station (26).

3. The method as claimed in claim 2, in which the filler product application station (26) comprises a first part (38) selectively activated to apply the first filler product (17) to the spread metal wires of the group and a second part (33) selectively activated to apply the second filler product (18) to the spread metal wires of the group, the second part (33) being farther upstream than the first part relative to the die (52).

4. The method as claimed in claim 3, in which the first part (38) of the filler product application station (26) comprises nozzles (41) for spraying the first filler product (17) directed convergently toward the spread metal wires of the group.

5. The method as claimed in claim 4, in which the first part (33) of the filler product application station (26) further comprises a tray (42) for recovering the first filler product (18) under the spray nozzles (41), and a system for recirculating the first filler product recovered in the tray to return it to the spray nozzles.

6. The method as claimed in any one of claims 2 to 5, in which the second part (33) of the filler product application station (26) comprises a mixer (35) for mixing a plurality of components (R, H) and a head (36) for depositing the mixture on the spread metal wires of the group.

7. The method as claimed in any one of claims 2 to 6, in which an air curtain is blown onto the group of spread metal wires between the first and second parts (38, 33) of the filler product application station (26).

8. The method as claimed in any one of claims 2 to 7, comprising:
heating the group of metal wires (16) ahead of the filler product application station (26), to a temperature between 80°C and 140°C inclusive.

9. The method as claimed in claim 8, in which the group of metal wires (16) is heated ahead of the filler product application station (26) by induction.

10. The method as claimed in any one of claims 2 to 9, comprising:
regulating the temperature of the group of compacted metal wires downstream of the filler product application station (26), the group of metal wires reaching the die (52), where the plastic material of the sheath (15) is extruded, at a temperature between 60°C and 120°C inclusive.

11. The method as claimed in claim 10, in which the regulation of the temperature of the group of metal wires downstream of the filler product application station (26) comprises:
cooling the group of metal wires to a temperature between 10°C and 30°C inclusive; then
reheating the group of metal wires to the temperature between 60°C and 120°C inclusive.

12. The method as claimed in claim 11, in which the group of metal wires (16) is cooled by a flow of air and heated by induction.

13. The method as claimed in any one of the preceding claims, in which the die (52) is part of an extrusion head (29) where there are successively deposited on the group of metal wires:
an adhesion primer (B); and
the plastic material (PE) of the sheath (15).

14. The method as claimed in claim 13, in which when the extrusion head (29) has passed through it a portion (11) of the strand in which the group of metal wires is coated with the first filler product (17), a rate of injection of the adhesion primer (B) is reduced relative to a moment at which the extrusion head has passed through it a portion (12) of the strand in which the group of metal wires is coated with the second filler product (18).

15. The method as claimed in any one of the preceding claims, comprising, downstream of the die (52):
cooling the group of metal wires enveloped in the sheath in a water bath (30).

16. An individually sheathed strand, comprising:
a group of metal wires (16);
a continuous plastic material sheath (15) ;
a first filler product (17) contained in the sheath (15) with the group of metal wires (16) in a first portion (11) of the strand; and
a second filler product (18) contained in the sheath with the group of metal wires (16) in a second portion (12) of the strand distinct from the first portion (11), the second filler product (18) adheres both to the metal wires (16) and to the internal surface of the sheath (15), the first and second portions extending in succession along the strand, the second filler product (18) having a greater adhesion to the group of metal wires (16) and the sheath (15) than the first filler product (17), and in that the plastic sheath (15) is continuous and of constant exterior section.

17. The individually sheathed strand as claimed in claim 16, having at least one third portion (13) situated between a first portion (11) and a second portion (12), where a mixture of the first and second filler products (17, 18) is contained in the sheath (15) with the group of metal wires (16).

18. The individually sheathed strand as claimed in claim 17, in which each third section (13) has a length between 20 cm and 3 m inclusive.

19. An installation for manufacturing an individually sheathed strand (10) according to the method as claimed in any one of the claims 1 to 15, comprising:
A drive device (23,24) of the strand along its path in the installation,
a die (52) to receive a group of metal wires (16);
on an upstream side of the die (52), a system (26) for applying a filler product to the group of metal wires (16) configured to selectively apply a first filler product (17) or a second filler product (18);
a system (29) for extruding a plastic material around the group of metal wires (16) conveyed through the die (52) by the drive device (23, 24) so as to envelop the group of metal wires coated with the filler product (17, 18) in a continuous sheath (15) formed by the extruded plastic material; and
a controller (50) of the filler product application system (26) for selecting a composition of the filler product applied as a function of the advance of the group of metal wires (16) in the filler product application system from the first filler product (17) and the second filler product (18) having a greater adhesion to the group of metal wires (16) and the sheath (15) than the first product, so as to manufacture an individually sheathed strand (10) which, along its length, has, extending in succession, portions (11) in which the sheath (15) does not adhere to the group of metal wires (16), and portions (12) where the sheath (15) adheres to the group of metal wires (16).
